# EUROPÄISCHE PATENTSCHRIFT

(11) **EP 1 983 037 B1**
(45) Veröffentlichungstag und Bekanntmachung des Hinweises auf die Patenterteilung: **09.12.2009**
(21) Anmeldenummer: 07017684.7
(22) Anmeldetag: 10.09.2007
(51) Int. Cl.: C09J 163/00, C09J 9/00, C09J 11/00, C09K 3/10

(54) **Reaktionsharz und Abdichtungssystem für Stahlbetonoberflächen mit einem Reaktionsharz**
Thermosetting resin and sealing system for reinforced concrete surfaces with a thermosetting resin
Résine composite et système d'étanchéification de surfaces en béton armé à l'aide d'une résine composite

(30) Priorität: 20.04.2007 DE 202007005742 U
(43) Veröffentlichungstag der Anmeldung: 22.10.2008
(73) Patentinhaber: STO AG, 79780 Stühlingen (DE)
(72) Erfinder: Fuchs, Berthold, 65207 Wiesbaden (DE)
(74) Vertreter: Leinweber & Zimmermann

(56) Entgegenhaltungen:
- EP-A- 0 342 965
- EP-A- 1 176 170
- WO-A-2005/056695
- DE-U1- 20 015 289

## Beschreibung

Die Erfindung betrifft ein Abdichtungssystem nach dem Oberbegriff des Patentanspruchs 1.

Für Ingenieurbauten, wie Brücken, verwendeter Stahlbeton ist vielfältigen physikalischen und chemischen Angriffen ausgesetzt. Zum Schutz des Stahlbetons und zur Sicherstellung der Standfestigkeit derartiger Ingenieurbauten werden häufig Abdichtungsschichten aus Bitumen bzw. Dichtungsschichten aus Bitumen-Schweißbahnen oder Flüssigkunststoff eingesetzt. Die Verwendung geeigneter Abdichtungsmaterialien auf Brükkenbauwerken aus Stahlbeton ist in Deutschland durch die "zusätzlichen technischen Vertragsbedingungen und Richtlinien für Ingenieurbauten" (ZTV-ING) herausgegeben von der Bundesanstalt für Straßenwesen (BAST) in Teil 7, Brückenbeläge, Abschnitt 1 bis 3, geregelt. Die Abdichtung hat danach mit einer Dichtungsschicht aus einer Bitumen-Schweißbahn (Abschnitt 1) mit einer Dichtungsschicht aus zweilagig aufgebrachten Bitumendichtungsbahnen (Abschnitt 2) oder mit einer Dichtungsschicht aus Flüssigkunststoff (Abschnitt 3) zu erfolgen. Die Aufgabe das Eindringen von Schadstoffen und Wasser in den Beton zu verhindern, fällt dabei der Bitumendichtungsbahn oder der Dichtungsschicht aus Flüssigkunststoff zu. Der dauerhafte und flächige Verbund sowohl der Bitumendichtungsbahn, als auch der Dichtungsschicht aus Flüssigkunststoff an der Betonoberfläche wird durch Reaktionsharze auf der Basis von Epoxidharzen sichergestellt. Es handelt sich hierbei in der Regel um lösemittelfreie, niedrigviskose, und ungefüllte und hitzebeständige Epoxidharzformulierungen. Sie sollen den technischen Lieferbedingungen für Reaktionsharze für Grundierungen, Versiegelungen und Kratzspachtelungen unter Asphaltbelägen auf Beton (TL-BEL-EP) entsprechen.

Der dauerhafte und flächige Verbund sowohl der einlagig als auch der zweilagig aufgebrachten Bitumendichtungsbahn mit der Epoxidharzschicht erfolgt durch einen Aufschweißvorgang, bei dem Aufschweißvorgang wird die Bitumendichtungsbahn üblicherweise durch die Beaufschlagung mit einer Gasflamme aufgeschmolzen. Dies kann mit einem 7-flammigem Brennerwagen mit Rollenbügel und Windschutz oder Verlegemaschinen erfolgen. Durch flächiges Andrücken ist nach dem Aufschmelzen des Bitumens sicherzustellen, daß eine vollflächige Verklebung der Bitumenbahn mit der Epoxidharzgrundierung erreicht wird. Nur durch diese vollflächige Verklebung kann sichergestellt werden, daß keine Hohlstellen bzw. Hohllagen zwischen Bitumendichtungsbahn und Epoxidharzschicht gebildet werden. Derartige Hohlstellen können bei der nachfolgenden Überschichtung mit der Schutzschicht aus Asphaltbeton beschädigt werden und eine nachträglich nicht mehr behebbare Fehlstelle in der Abdichtungsmaßnahme darstellen. Es hat sich gezeigt, daß das Auftreten derartiger Fehlstellen oft nicht erkennbar ist. Angesichts dieser Probleme im Stand der Technik liegt der Erfindung die Aufgabe zugrunde, einem Reaktionsharz, insbesondere auf der Basis von Epoxidharz, zum Befestigen einer Abdichtungsschicht an einer Stahlbeton oberfläche bereitzustellen, der Fehlstellen in einer Abdichtung einer Stahlbetonoberfläche erkennen läßt.

In der EP 0 342 965 A1 ist ein Epoxidharz beschrieben, das einen Farbstoff aufweist, dessen Farbe sich im verlauf des Aushärtungsvorgangs ändert.

Erfindungsgemäß werden diese Probleme durch die im kennzeichnenden Teil des Patentanspruchs 1 angegebene eine Weiterbildung bekannter Abdichtungssysteme gelöst, bei der vorzugsweise ein organischen Farbstoff zum Einsatz kommt und die Farbe des Farbstoffs sich, bei Erwärmung auf eine Zieltemperatur von 100°C oder mehr, vorzugsweise 120°C oder mehr, besonders bevorzugt 130°C oder mehr irreversibel ändert.

Diese Erfindung geht auf die Erkenntnis zurück, daß eine mögliche Fehlerquelle, die für eine nicht vollflächige Verklebung verantwortlich sein kann, im ungleichmäßigen Aufschmelzen der Bitumendichtungsbahn in Folge ungleichmäßiger Hitzeeinwirkung der diversen Flammen bzw. Brennertulpen des Brennerwagens zu sehen ist. Dieser Mangel war mit den bisher verwendeten Epoxidharzen nicht festzustellen. Es war im besonderen nicht erkennbar, ob beim Aufschweißvorgang der Bitumendichtungsbahn ein gleichmäßiges Aufschmelzen der Klebemasse Bitumen erreicht worden ist. Erfindungsgemäß wird dieses Problem durch den Einsatz eines vorzugsweise organischen Farbstoffs gelöst, der in dem üblicherweise zur Herstellung von Abdichtungssystemen benutzten Epoxidharzsystem enthalten ist. Der Farbstoff ändert beim Erreichen einer vorgegebenen Zieltemperatur seine Farbe. Die gleichmäßige Temperaturführung beim Aufschweißen der Bitumendichtbahn ist somit an der gleichmäßigen Färbung bzw. Umfärbung des als Grundierung für die zu beschichtende Stahlbetonoberfläche verwendeten Reaktionsharzes, insbesondere Epoxidharzes erkennbar. Für den Verarbeiter ist dadurch visuell leicht zu erkennen, ob die zur optimalen Verklebung benötigte Aufschweißtemperatur der behandelten Unterlage erreicht wurde. Der Ausfall einzelner Brennertulpen oder der Versatz der Gasflamme bei Seitenwind werden ebenfalls sofort sichtbar. Mit dem erfindungsgemäßen Reaktionsharz kann daher eine Verbesserung im Hinblick auf die Qualitätssicherung während der Verarbeitung von Bitumendichtungsbahn oder anderen Abdichtungsschichten erreicht werden.

Als besonders günstig hat es sich im Hinblick auf die Erkennung des Farbumschlags ohne optische Hilfsmittel erwiesen, wenn das Maximum des Reflexionsspektrums des in der Reaktionsharzgrundierung gelösten Farbstoffs sich bei Bestrahlung mit einem Farbstrahler mit einer Farbtemperatur von 4000 Kelvin durch die irreversible Änderung um 25 nm oder mehr, insbesondere 50 nm oder mehr, besonders bevorzugt 75 nm oder mehr verschiebt. Dabei kann sich die Farbe des Farbstoffs durch die Erwärmung von gelb nach rot umwandeln bzw. die Rotdifferenz bei Tagesnordlicht 6500 K delta a gemäß CIE L*a*b* +20 oder mehr, insbesondere etwa +25 betragen. Die gemäß CIE L*a*b* angegebene Rotdifferenz kann bei Glühlampenlicht (A10) delta a +20 oder mehr, insbesondere +23 oder mehr betragen. Das gemäß der angegebenen und in der Farbmetrik geläufigen Methode gemessene delta L (Farbhelligkeit) liegt bei -20 oder weniger, vorzugsweise etwa -30, gemessen gegen eine unbelastete Probe mit der Grundierung der Anmelderin StoPox BV 100.

Als besonders zweckmäßig hat es sich erwiesen, wenn die Farbänderung durch eine Rekristallisation von Pigmentteilchen des Farbstoffs erfolgt, weil so eine Änderung chemischer Eigenschaften des Farbstoffs vermieden wird und die Bindungseigenschaften des Reaktionsharzes durch die bei der Temperaturerhöhung erfolgende Farbänderung nicht beeinflußt werden.

Vorzugsweise werden die Pigmentteilchen des Farbstoffs durch die Rekristallisation vergrößert. Der zum Herstellen erfindungsgemäßer Reaktionsharze eingesetzte Farbstoff kann beispielsweise das Hansa Brillantgelb, Pigment Yellow 74, C.I.-No. 11741 enthalten. Dabei handelt es sich um ein Monoazo(gelb)pigment, dessen Eigenschaften beschrieben sind in der von Annette Fritsch am 15.09.2006 bei der Fachhochschule der Künste Bern vorgelegten Diplomarbeit "Hansapigmente". Im Hinblick auf die Vermeidung einer übermäßigen Beeinträchtigung der Bindungseigenschaften des Reaktionsharzes bei gleichzeitiger Sicherstellung einer ausreichenden Überprüfungsmöglichkeit hat es sich als zweckmäßig erwiesen, wenn der Anteil des Farbstoffs in dem Reaktionsharz bzw. der daraus hergestellten Reaktionsharzgrundierung, insbesondere Epoxidharzgrundierung 0,1 Gew.-% oder mehr, insbesondere 0,2 Gew.-% oder mehr und vorzugsweise 1 Gew.-% oder weniger, besonders bevorzugt 0,5 Gew.-% oder weniger beträgt. Wenn der Farbstoffanteil weniger als 0,1 Gew.-% beträgt, ist die Wirkung der Farbänderung kaum noch ohne optische Hilfsmittel zu erkennen. Andererseits wird bei Überschreiten des Anteils von 1 Gew.-% eine Beeinflussung der Bindungseigenschaften der Grundierung beobachtet. Im übrigen ist die Farbstoffmenge dahingehend optimiert, daß bei einem zweischichtigen Grundierungsaufbau die Deutlichkeit des Farbumschlags sicher gegeben ist, andererseits das teure Pigment nur in der Menge eingesetzt wird, die wirtschaftlich vertretbar erscheint.

Die Abdichtungsschicht eines erfindungsgemäßen Abdichtungssystems kann eine durch Beflammen aufschmelzbare Bitumenbahn aufweisen. Bei einem erfindungsgemäßen Verfahren zum Abdichten von Stahlbetonoberflächen wird eine beispielsweise in Form einer Bitumenbahn verwirklichte Abdichtungsschicht auf eine mit einem Reaktionsharz grundierte Stahlbetonoberfläche aufgeklebt. Dazu wird die Abdichtungsschicht vorzugsweise einseitig durch Beflammen aufgeschmolzen und vollflächig an die grundierte Stahlbetonoberfläche angedrückt. Dazu können herkömmliche Brennerwagen mit Rollenbügel und Windschutz oder Verlegemaschinen eingesetzt werden.

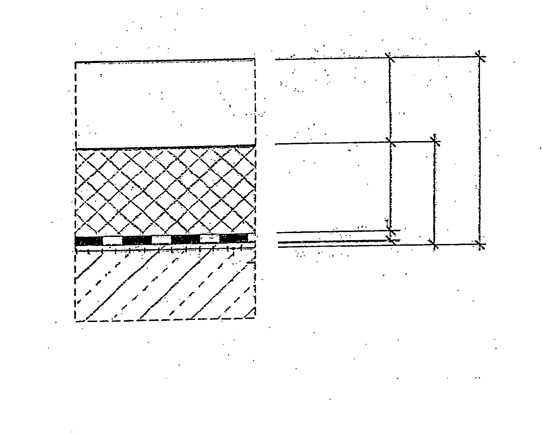

Die einzige Figur der Zeichnung zeigt schematisch den Aufbau eines Brückenbelags mit einer einlagigen Bitumen-Schweißbahn nach Abschnitt 1 der ZTV-ING Teil 7.

## Patentansprüche

1. Abdichtungssystem für Stahlbetonoberflächen mit einer Grundierung aus einem Reaktionsharz und einer zumindest einseitig durch eine Wärmebehandlung in einen haftfähigen Zustand überführbaren Abdichtungsschicht, **dadurch gekennzeichnet, daß** das Reaktionsharz einen Farbstoff aufweist, dessen Farbe sich bei Erwärmen auf eine Zieltemperatur von 100 °C oder mehr irreversibel ändert.

2. Abdichtungssystem nach Anspruch 1, **dadurch gekennzeichnet, daß** das Maximum des Reflexionsspektrums des in dem Reaktionsharz gelösten Farbstoffs sich bei Bestrahlen mit einem Farbstrahler mit einer Farbtemperatur von 4000 Kelvin durch die irreversible Änderung um 25 nm oder mehr verschiebt.

3. Abdichtungssystem nach einem der vorhergehenden Ansprüche, **dadurch gekennzeichnet, daß** der Anteil des Farbstoffs in dem Reaktionsharz 0,1 Gew.-% oder mehr beträgt.

4. Abdichtungssystem nach einem der vorhergehenden Ansprüche, **dadurch gekennzeichnet, daß** der Anteil des Farbstoffs in dem Reaktionsharz 1 Gew.-% oder weniger beträgt.

5. Abdichtungssystem nach einem der vorhergehenden Ansprüche, **dadurch gekennzeichnet, daß** die Abdichtungsschicht eine durch Beflammen aufschmelzbare Bitumenbahn aufweist.

6. Verwendung eines Reaktionsharzes mit einem Farbstoff, dessen Farbe sich bei Erwärmen auf eine Zieltemperatur von 100 °C oder mehr irreversibel ändert, als Grundierung für Stahlbetonoberflächen zur Herstellung eines Abdichtungssystems nach einem der Ansprüche 1 bis 5.

7. Verfahren zum Abdichten von Stahlbetonoberflächen, bei dem eine Abdichtungsschicht auf eine mit einer Grundierung aus einem Reaktionsharz versehene Stahlbetonoberfläche aufgeklebt wird, **dadurch gekennzeichnet, daß** das Reaktionsharz einen Farbstoff aufweist, dessen Farbe sich bei Erwärmen auf eine Zieltemperatur von 100 °C oder mehr irreversibel ändert.

## Claims

1. A sealing system for reinforced concrete surfaces with a primer made of a reaction resin and a sealing layer which can be transformed on at least one side into an adhesive state by means of a heat treatment, **characterised in that** the reaction resin has a colourant the colour of which changes irreversibly when heated to a target temperature of 100°C or more.

2. The sealing system according to Claim 1, **characterised in that** the maximum of the reflection spectrum of the colourant dissolved in the reaction resin moves by 25 nm or more due to the irreversible change when irradiated with a colour radiator at a colour temperature of 4000 Kelvin.

3. The sealing system according to any of the preceding claims, **characterised in that** the portion of the colourant in the reaction resin is 0.1% by weight or more.

4. The sealing system according to any of the preceding claims, **characterised in that** the portion of the colourant in the reaction resin is 1 % by weight or less.

5. The sealing system according to any of the preceding claims, **characterised in that** the sealing layer has bituminous sheeting that can be melted by flame treatment.

6. The use of a reaction resin with a colourant, the colour of which changes irreversibly when heated to a target temperature of 100°C or more, as a primer for reinforced concrete surfaces for the production of a sealing system according to any of Claims 1 to 5.

7. A method of sealing reinforced concrete surfaces wherein a sealing layer is adhesively bonded onto a reinforced concrete surface provided with a primer made of a reaction resin, **characterised in that** the reaction resin has a colourant the colour of which changes irreversibly when heated to a target temperature of 100°C or more.

## Revendications

1. Système d'étanchéité pour surfaces en béton armé comportant une couche primaire à base de résine réactive et une couche d'étanchéité susceptible d'être amenée à un état d'adhésivité sur au moins une face par traitement thermique, **caractérisé en ce que** la résine réactive présente un colorant dont la couleur se transforme de manière irréversible par chauffage à une température cible d'au moins 100 °C

2. Système d'étanchéité selon la revendication 1, **caractérisé en ce que** le maximum du spectre de réflexion du colorant dissous dans la résine réactive se déplace d'au moins 25 nm lors d'une exposition à un projecteur de couleur à une température de couleur de 4000 Kelvin du fait de la transformation irréversible.

3. Système d'étanchéité selon l'une des revendications précédentes, **caractérisé en ce que** la proportion du colorant au sein de la résine réactive est d'au moins 0,1% en poids.

4. Système d'étanchéité selon l'une des revendications précédentes, **caractérisé en ce que** la proportion du colorant au sein de la résine réactive ne dépasse pas 1 % en poids.

5. Système d'étanchéité selon l'une des revendications précédentes, **caractérisé en ce que** la couche d'étanchéité présente une bande bitumée susceptible de fondre par flammage.

6. Utilisation d'une résine active comportant un colorant dont la couleur se transforme de manière irréversible par chauffage à une température cible d'au moins 100 °C, en tant que couche primaire pour surfaces en béton armé, en vue de produire un système d'étanchéité selon l'une des revendications 1 à 5.

7. Procédé d'étanchéification de surfaces en béton armé, dans lequel on colle une couche d'étanchéité sur une surface en béton armé pourvue d'une couche primaire à base de résine réactive, **caractérisé en ce que** la résine réactive présente un colorant dont la couleur se transforme de manière irréversible par chauffage à une température cible d'au moins 100 °C.
